# EUROPÄISCHE PATENTANMELDUNG

(11) **EP 1 241 242 A2**
(43) Veröffentlichungstag der Anmeldung: **18.09.2002**
(21) Anmeldenummer: 02005177.7
(22) Anmeldetag: 08.03.2002
(51) Int. Cl.: C09K 11/84, G06K 19/14, G06K 7/12, C09D 11/00

(54) **Anti-stokes-Leuchtstoffe für die Anwendung in Sicherheitsdokumenten**

(30) Priorität: 16.03.2001 DE 10113267
(71) Anmelder: Bundesdruckerei GmbH, 10958 Berlin (DE); Leuchtstoffwerk Breitungen GmbH, 98597 Breitungen (DE)
(72) Erfinder: Paeschke, Manfred, Dr., 16352 Basdorf (DE); Ahlers, Benedikt, Dr., 10997 Berlin (DE); Bailleu, Anett, Dr., 13127 Berlin (DE); Muth, Oliver, Dr., 12277 Berlin (DE); Franz-Burgholz, Arnim, 14612 Falkensee (DE); Schmidt, Wolfgang, 13593 Berlin (DE); Kempfert, Wolfgang, 36448 Liebenstein (DE); Starick, Detlef, 36448 Liebenstein (DE)

(57) **Zusammenfassung**

Es wird ein Anti-Stokes-Leuchtstoff für die Anwendung in Sicherheitsdokumenten vorgeschlagen, wobei der Anti-Stokes-Leuchtstoff Ionen (Absorber) zur Absorbtion von elektromagnetischer Strahlung und Ionen (Emitter) zur Emission von elektromagnetischer Strahlung (Anti-Stokes-Lumineszenz) aufweist, wobei die Wellenlänge der emittierten elektromagnetischen Strahlung kleiner ist als die Wellenlänge der absorbierten elektromagnetischen Strahlung. Dabei ist die Konzentration des Absorbers und/oder die Konzentration des Emitters so eingestellt, dass eine für die automatische Detektion des Anti-Stokes-Leuchtstoffs geeignete Anklingzeit und/oder Abklingzeit der Anti-Stokes-Lumineszenz erreicht wird.

## Beschreibung

Die Erfindung betrifft Anti-Stokes-Leuchtstoffe für die Anwendung in Sicherheitsdokumenten nach Gattung des unabhängigen Anspruchs Die Anwendung von Anti-Stokes-Luminophoren zur Kodierung von Sicherheitsdokumenten wurde erstmals 1974 von MALMBERG et al. in einer prioritätsbegründenden schwedischen Anmeldung (entspr. DE 2 547 768) erwähnt.

BRATCHLEY et al. blieb es vorbehalten, in den 1991 getätigten Anmeldungen GB 2 258 659 und GB 2 258 660 auch oxysulfidischen Anti-Stokes-Luminophore als Materialien zur Kodierung von Sicherheitsdokumenten vorzuschlagen. Dabei beziehen sich beide Schriften allerdings ausschließlich auf das Y₂O₂S als Grundgittermaterial.

In der 1999 von MÜLLER et al. als WO 00/60527 eingereichten Anmeldung wird ausgehend von MALMBERG et al. vorgeschlagen, die Anti-Stokes-Lumineszenz oxysulfidischer Materialien zur Erhöhung der Detektionssicherheit mit einem gepulsten 980 nm-Laser anzuregen. Gleichzeitig werden die Anregungsbedingungen aber so gestaltet, dass mit den für das menschliche Auge unschädlichen Lasern der Klasse 1 (Austrittsleistung < 1 mW) gearbeitet werden kann. Dies geschieht durch genaue Anpassung der Pulsfrequenz und des Pulsabstandes an die vorgefundene Anklingcharakteristik der verwendeten Luminophore. Die Einstellung der genannten Laserparameter erfolgt so, dass die resultierenden Lumineszenzintensitäten zumindest 50 %, besser 80 % oder vorteilhafterweise 90 % der Sättigungsintensität (Intensität bei stationärer Laser-Anregung) des jeweiligen Leuchtstoffes betragen.

Als Leuchtstoffe werden im beschreibenden Teil der WO 00/60527 u.a. die Verbindungen Y₂ O₂S:Yb, Er, Y₂O₂S:Yb, Tm und Gd₂ O₂S:Yb, Er genannt.

### Vorteile der Erfindung

Die erfindungsgemäßen Anti-Stokes-Leuchtstoffe für die Verwendung in Sicherheitsdokumenten nach dem kennzeichnenden Merkmal des Anspruchs 1 haben demgegenüber den Vorteil, dass in diesem Fall das An- und Abklingverhalten des Anti-Stokes-Leuchtstoffs auf die für eine Hochgeschwindigkeitsdetektion erforderliche hohe Pulsfrequenz des Lasers eingestellt wird, so dass eine automatische Verifikation des mit dem Anti-Stokes-Leuchtstoff als Sicherheitsmerkmal versehenen Sicherheitsdokuments möglich ist. Das kann durch eine vorteilhafte Modifizierung der Zusammensetzung des erfindungsgemäßen Leuchtstoffes erreicht werden.

Ein weiterer Vorteil des erfindungsgemäßen Leuchtstoffs für die Verwendung in Sicherheitsdokumenten besteht darin, dass die Intensitätsverhältnisse zwischen den einzelnen Emissionsliniengruppen variierbar sind.

Durch die in den Unteransprüchen aufgeführten Maßnahmen sind weitere vorteilhafte Ausbildungen und Verbesserungen des im unabhängigen Anspruch angegebenen Leuchtstoffs für die Verwendung in Sicherheitsdokumenten möglich. Die Vorteile ergeben sich dabei aus nachfolgend erläuterter Beschreibung.

### Beschreibung der Ausführungsbeispiele

Bei dem erfindungsgemäß in einem Sicherheitsdokument verwendeten Anti-Stokes-Leuchtstoff (Synonyme: Anti-Stokes-Pigment, Anti-Stokes-Phosphor, Up-Conversion-Material) handelt es sich um ein Thulium-aktiviertes und Ytterbiumkodotiertes Gadoliniumoxysulfid der Zusammensetzung
(Gd_{1-x-y}YbₓTmₓ)₂ O₂S
oder auch (andere Schreibweise)
(Gd_{1-x-y})₂O₂S:Ybₓ, Tmy
wobei anstelle des Gadoliniums zumindest anteilig auch Yttrium und/oder Lanthan und/oder Luthetium als Grundgitter-(Wirtsgitter-, Matrix-) Bestandteile eingesetzt werden können. Dabei fungiert das Yb als Absorber der zumeist infaroten Anregungsstrahlung und Tm als Emitter der sichtbaren oder unsichtbaren Lumineszenzstrahlung (Anti-Stokes-Lumineszenz).

Der Leuchtstoff ist in der Lage, vergleichsweise energiearme infrarote (IR) Anregungsstrahlung in energiereichere Strahlung (Anti-Stokes-Lumineszenz) umzuwandeln (Up-Conversion bzw. Anti-Stokes-Effekt). Die emittierte Strahlung kann sowohl im sichtbaren als auch im nicht-sichtbaren Bereich liegen.

Die Intensitätsverhältnisse zwischen den einzelnen Liniengruppen der Emission können über die konkrete Leuchtstoffzusammensetzung, insbesondere über die Ytterbium- und/oder Thuliumkonzentration eingestellt werden.

Es zeigt sich, dass Anti-Stokes-Leuchtstoffe etwa im Vergleich zu Photo- oder Kathodoluminophoren im allgemeinen ein relativ langsames Anklingen aufweisen, das ggf. bis zu einigen hundert µs reichen kann. Ein derart verzögertes Anschwellen der Lumineszenz greift natürlich beträchtlich in das Zeitverhalten des Anregungs- und Detektionssystems ein und zwar dergestalt, dass es die Detektionssicherheit und die Auslesegeschwindigkeit stark limitiert. Deshalb müssen Anregungsmodus und Lumineszenzkinetik genau auf die Zeitfunktionen des Detektionssystems und der Auswerteelektronik abgestimmt werden. Dies ist mit Hilfe des hier zur Verwendung in Sicherheitsdokumenten vorgeschlagenen Anti-Stokes-Leuchtstoffs möglich.

Bei gepulster Anregung entscheidet die An- und Abklingcharakteristik des verwendeten Anti-Stokes-Leuchtstoffes in hohem Maße über die erreichbare Detektionssicherheit und die mögliche Auslesegeschwindigkeit eines maschinell zu prüfenden Lumineszenzmerkmals. Dabei kann das Anklingen z.B. durch die Zeitdauer, die für das Erreichen des 90 %-Wertes der Sättigungsintensität benötigt wird oder aber durch die sogenannte Anklingkonstante (Zeitdauer für das Erreichen von 1/e-tel der stationären Lumineszenzintensität) gekennzeichnet werden. Auch für die Bewertung des Abklingverhaltens von Leuchtstoffen sind vergleichbare Kriterien in Gebrauch.

Bei gegebener hoher Auslesegeschwindigkeit darf die Anklingzeit der Anti-Stokes-Lumineszenz einen bestimmten Wert nicht überschreiten, wenn eine über der Empfindlichkeitsschwelle des Detektors liegende effektive Lumineszenzintensität gesichert werden soll. Dieser Effektivwert der Intensität wird durch die Relation zwischen der stationären Intensität und die Anklingzeit bestimmt.

Im Falle des erfindungsgemäßen Pigmentes Gd₂ O₂S:Yb, Tm lassen sich die Verhältnisse zwischen der Sättigungsintensität und den An- und Abklingzeiten in einem weiten Bereich variieren. Insbesondere gelingt es, die für die Realisierung einer High-Speed-Detektion erforderlichen niedrigen Anklingzeiten und/oder Abklingzeiten sicher zu stellen. Zu diesem Zwecke werden die Ytterbiumund/oder Thuliumkonzentrationen, d.h. die Konzentrationen des Absorbers und/oder des Emitters der elektromagnetischen Strahlung, so eingestellt, dass die Wechselwirkungen zwischen diesen lonen bereits zu einer anteiligen Löschung der Anti-Stokes-Lumineszenz (Konzentrationslöschung) führen. Beispielsweise wird die Yb- und die Tm- Konzentration für hohe Auslesegeschwindigkeiten in folgenden Grenzen gewählt:(Gd_{1-x-y})₂O₂S:Ybₓ, Tm_{y}
mit 0,05 ≤ x ≤ 0,80 und 0,0001 ≤ y ≤ 0,10, vorteilhaft für Auslesegeschwindigkeiten zwischen 3 und 6 m/s mit
0,20 ≤ x ≤ 0,60 und 0,0001 ≤ y ≤ 0,05.

Da wie oben angegeben das Verhältnis der Intensitäten der Emissionslinien des Emissionsspektrums und das An- und Abklingverhalten über die Konzentration des Absorbers und/oder des Emitters beeinflußt wird, kann aus einer kombinierten Detektion beider von einander abhängigen Eigenschaften eine Identifizierung des Leuchtstoffs und damit des Sicherheitsdokuments mit noch größerer Sicherheit erfolgen.

Ein derartiger Anti-Stokes-Luminophor, der für ein Sicherheitsdokument verwendet wird, besitzt eine auf eine schnelle Verifizierung mittels gepulstem Laser abgestimmte optimale effektive Intensität.

Weitere Möglichkeiten der Beeinflussung der An- und Abklingcharakteristik liegen im gezielten Einbau von weiteren Kationen- und/oder Anionen in das Leuchtstoffgitter. Diese lonen haben die Eigenschaft, in die Wechselwirkungen zwischen den Ytterbium- und/oder Thuliumionen einzugreifen und zwar dergestalt, dass sie die stätionäre Anti-Stokes-Lumineszenz nur unwesentlich verringern, während die An-und Abklingzeiten deutlich reduziert werden.

Als Sicherheitsdokumente gelten in der vorliegenden Offenbarung insbesondere Briefmarken, Banknoten, Ausweise, Pässe, Verpackungen, Label und Aufkleber, Fahrausweise, Eintrittskarten und andere Tickets, Steuerzeichen sowie Aktien. Im weiteren Sinne werden im Rahmen der hier dargestellten Erfindung alle bedruckbaren und sonst wie mit Sicherheitsmerkmalen versehbaren Erzeugnisse, beispielsweise Verpackungen, als Sicherheitsdokumente angesehen.

Eine gezielte Beeinflussung des An- und Abklingverhaltens und des Verhältnisses der Intensitäten der Emissionslinien durch die Konzentration des Absorbers und/oder des Emitters sowie durch den Einbau von zusätzlichen Anionen und/oder Kationen in das Leuchtstoffgitter wie in der oben angegebenen Beschreibung für den Fall des (Gd_{1-x-y})₂O₂S:Ybₓ, Tmy angegeben, kann auch für andere Anti-Stokes-Leuchtstoffe durchgeführt werden.

## Patentansprüche

1. Anti-Stokes-Leuchtstoff für die Anwendung in Sicherheitsdokumenten, wobei der Anti-Stokes-Leuchtstoff lonen (Absorber) zur Absorbtion von elektromagnetischer Strahlung und lonen (Emitter) zur Emission von elektromagnetischer Strahlung (Anti-Stokes-Lumineszenz) aufweist, wobei die Wellenlänge der emittierten elektromagnetischen Strahlung kleiner ist als die Wellenlänge der absorbierten elektromagnetischen Strahlung, **dadurch gekennzeichnet, dass** die Konzentration des Absorbers und/oder die Konzentration des Emitters derart eingestellt ist, dass eine für die automatische Detektion des Anti-Stokes-Leuchtstoffs geeignete Anklingzeit und/oder Abklingzeit der Anti-Stokes-Lumineszenz erreicht wird.

2. Anti-Stokes-Leuchtstoff nach Anspruch 1, **dadurch gekennzeichnet, dass** der Anti-Stokes-Leuchtstoff ein Gadoliniumoxysulfid der Zusammensetzung (Gd_{1-x-y}YbₓTmₓ)₂ O₂S bzw. (Gd_{1-x-y})₂O₂S:Ybₓ, Tm_{y} ist, wobei Ytterbium den Absorber und Thulium den Emitter bildet.

3. Anti-Stokes-Leuchtstoff nach einem der Ansprüche 1 oder 2, **dadurch gekennzeichnet, dass** anstelle des Gadoliniums zumindest anteilig auch Yttrium und/oder Lanthan und/oder Luthetium als Grundgitter-(Wirtsgitter-, Matrix-) Material eingesetzt ist.

4. Anti-Stokes-Leuchtstoff nach einem der Ansprüche 2 bis 3, **dadurch gekennzeichnet, dass** die für eine Hochgeschwindigkeits-Detektion erforderlichen niedrigen Anklingzeiten und/oder Abklingzeiten durch Einstellung der Absorber- und/oder Emitterkonzentrationen so eingestellt sind, dass die Wechselwirkungen zwischen diesen lonen bereits zu einer anteiligen Löschung der Anti-Stokes-Lumineszenz (Konzentrationslöschung) führt.

5. Anti-Stokes-Leuchtstoffe nach einem der Ansprüche 2 bis 4, **dadurch gekennzeichnet, dass** die Ytterbium- und die Thuliumkonzentration für schnelle Auslesegeschwindigkeiten in folgenden Grenzen gewählt wird
((Gd_{1-x-y})₂O₂S:Ybₓ, Tm_{y}):
0,05 ≤ x ≤ 0,80 und 0,0001 ≤ y ≤ 0,10,
wobei die Ytterbium- und die Thuliumkonzentration vorteilhaft für Auslesegeschwindigkeiten zwischen 3 und 6 m/s in folgenden Grenzen gewählt wird:
0,20 ≤ x ≤ 0,60 und 0,0001 ≤ y ≤ 0,05.

6. Anti-Stokes-Leuchtstoffe nach einem der Ansprüche 1 bis 4, **dadurch gekennzeichnet, dass** die Intensitätsverhältnisse zwischen den einzelnen Emissionsliniengruppen variierbar sind und von der Absorber- und/oder der Emitterkonzentration im Leuchtstoff abhängen.

7. Anti-Stokes-Leuchtstoff nach einem der Ansprüche 1 bis 5, **dadurch gekennzeichnet, dass** zur gezielten Beeinflussung der An- und Abklingcharakteristik des Leuchtstoffes weitere Kationen- und/oder Anionen in das Leuchtstoffgitter eingebaut sind.
